(19) Europäisches Patentamt / European Patent Office / Office européen des brevets

(11) **EP 2 652 073 B1**

(12) **EUROPEAN PATENT SPECIFICATION**

(45) Date of publication and mention
of the grant of the patent:
**11.03.2020 Bulletin 2020/11**

(21) Application number: **11797005.3**

(22) Date of filing: **14.12.2011**

(51) Int Cl.:
*C09K 8/60* *(2006.01)*        *C09K 8/72* *(2006.01)*
*C09K 8/86* *(2006.01)*

(86) International application number:
**PCT/EP2011/072693**

(87) International publication number:
**WO 2012/080296 (21.06.2012 Gazette 2012/25)**

(54) **PROCESS AND FLUID TO IMPROVE THE PERMEABILITY OF SANDSTONE FORMATIONS USING A CHELATING AGENT**

VERFAHREN UND FLÜSSIGKEIT ZUR VERBESSERUNG DER DURCHLÄSSIGKEIT VON SANDSTEINFORMATIONEN MIT EINEM CHELATBILDNER

PROCÉDÉ ET SOLUTION POUR L'AMÉLIORATION DE LA PERMÉABILITÉ DE FORMATIONS DE GRÈS À L'AIDE D'UN AGENT CHÉLATANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2010 US 201061424182 P**
**21.01.2011 EP 11151725**
**13.06.2011 US 201161496111 P**

(43) Date of publication of application:
**23.10.2013 Bulletin 2013/43**

(73) Proprietor: **Nouryon Chemicals International B.V.**
**6824BM Arnhem (NL)**

(72) Inventors:
• **NASR-EL-DIN, Hisham**
**College Station**
**Texas 77845 (US)**
• **DE WOLF, Cornelia, Adriana**
**NL-6961 PC Eerbeek (NL)**
• **NASR-EL-DIN MAHMOUD, Mohamed, Ahmed**
**Dhahran 31261 (SA)**
• **BOUWMAN, Albertus, Jacobus, Maria**
**NL-6923 PL Groessen (NL)**
• **GEORGE, Noble, Thekkemelathethil**
**College Station**
**TX 77843-3116 (US)**

(74) Representative: **LKGlobal UK Ltd.**
**Cambridge House, Henry Street**
**Bath BA1 1BT (GB)**

(56) References cited:
WO-A1-2005/103334    WO-A1-2008/015464
WO-A1-2008/089262    WO-A1-2009/024518
WO-A1-2009/086954    WO-A2-2009/006326
WO-A2-2009/137399    JP-A- 2001 003 089
JP-A- 2009 091 469

**Description**

The present invention relates to a process for treating sandstone formations with a fluid containing glutamic acid N,N-diacetic acid or a salt (GLDA).

Subterranean formations from which oil and/or gas can be recovered can contain several solid materials contained in porous or fractured rock formations. The naturally occurring hydrocarbons, such as oil and/or gas, are trapped by the overlying rock formations with lower permeability. The reservoirs are found using hydrocarbon exploration methods and often one of the purposes of withdrawing the oil and/or gas therefrom is to improve the permeability of the formations. The rock formations can be distinguished by their major components, and one category is formed by the so-called sandstone formations, which contain siliceous materials like quartz as the major constituent and which in addition may contain various amounts of clays (aluminosilicates such as kaolinite or illite) or alkaline aluminosilicates such as feldspars, and zeolites, as well as carbonates (calcite, dolomite, ankerite) and iron-based minerals (hematite and pyrite).

In sandstone there normally is an amount of calcium carbonate and one way to make sandstone more permeable is to perform a so-called acidizing step, wherein an acid solution is pumped into the formation. Acidizing of sandstone formations is generally performed for one of three purposes: 1) to open or "break down" perforations, 2) to remove acid-soluble scales, and 3) to increase permeability in the near-wellbore area, such as removing formation damage resulting from previous actions.

High-temperature sandstone acidizing is very challenging because of the complex reactions that occur between the treatment fluids and the sandstone formation minerals, which in addition may lead to consequential side reactions. Such reactions are more likely to occur at elevated temperatures and can result in potentially damaging precipitation reactions.

Gdanski, R.D. and Shuchart, C.E. (1998). "Advanced Sandstone-Acidizing Designs with Improved Radial Models," SPE Production & Facilities 13 (4): 272-278. DOI: 10. 2118/52397-PA have shown that essentially all clays are unstable in HCI above 250°F (corresponding with about 121°C).

Several documents disclose the use of chelating agents in acidizing sandstone formations instead of using HCl. For example, Frenier, W.W., Brady, M., Al-Harthy, S. et al. (2004), "Hot Oil and Gas Wells Can Be Stimulated without Acids," SPE Production & Facilities 19 (4): 189-199. DOI: 10.2118/86522-PA, show that formulations based on the hydroxyethylaminocarboxylic acid family of chelating agents can be used to increase production of oil and gas from wells in a variety of different formations, such as carbonate and sandstone formations.

Parkinson, M., Munk, T., Brookley, J., Caetano, A., Albuquerque, M., Cohen, D., and Reekie, M. (2010), "Stimulation of Multilayered HighCarbonate-Content Sandstone Formations in West Africa Using Chelant-Based Fluids and Mechanical Diversion," Paper SPE 128043 presented at the SPE International Symposium and Exhibition on Formation Damage, Lafayette, Louisiana, 10-12 February. DOI: 10. 2118/128043-MS, disclose the use of HEDTA to stimulate sandstone formations. The Pinda formation in West Africa has a wide range of carbonate content (varying from 2% to nearly 100%) and the formation temperature is 300°F (about 149°C). The results show that $Na_3$HEDTA was more effective in stimulating the reservoir than the traditional treatment with 7.5 wt% HCI. The document also discloses a formulation containing HEDTA with 0.2% corrosion inhibitor, 0.2% surfactant, and 0.4% de-emulsifier.

However, there is still a need to find a process and a stimulation used in such process that further improve the permeability of a sandstone formation and avoid the disadvantages of working with strong inorganic acids at the elevated temperatures inherent for a large number of subterranean formations. In addition, there is a need to provide a process and a stimulation fluid which ensure better removal of the near-wellbore damage without depositing precipitates in the formation, as well as better prevention of well production decline due to solids movements. Preferably, the stimulation fluid is biodegradable in both fresh and seawater and has a favourable eco-tox profile.

The present invention provides a process for treating a sandstone formation comprising introducing an acidic fluid containing glutamic acid N,N-diacetic acid or a salt thereof (GLDA) and having a pH of higher than 1 into the formation.

The fluid in the process contains 5-30 wt% of GLDA. The term "treating" in this application is intended to cover any treatment of the formation with the fluid. It specifically covers treating the sandstone formation with the fluid to achieve at least one of (i) an increased permeability, (ii) the removal of small particles, and (iii) the removal of inorganic scale, and so enhance the well performance and enable an increased production/recovery of oil and/or gas from the formation. At the same time, it may cover cleaning of the wellbore and descaling of the oil/gas production well and production equipment.

Although GLDA has a lower stability constant for all metals than HEDTA and is therefore considered to have a smaller chelating capacity than HEDTA, it was surprisingly found that the process of the invention using a solution containing GLDA instead of HEDTA further improves the permeability of sandstone formations. Also, GLDA appears to have a good selectivity for dissolving carbonates in the sandstone formation.

In addition, the present disclosure mentions a stimulation fluid suitable for use in a process to treat sandstone or to make sandstone formations permeable for liquids, i.e. a process to remove carbonate from sandstone. The fluid of the invention is a fluid containing GLDA, a corrosion inhibitor, a surfactant, and optionally a mutual solvent.

Finally, the present disclosure mentions a kit of parts for a treatment process consisting of several stages, such as the pre-flush, main treatment and postflush stage, wherein one part of the kit of parts for one stage of the treatment process, contains a fluid containing GLDA, a corrosion inhibitor, and a surfactant, and the other part of the kit of parts for the other stage of the treatment process, contains a mutual solvent, or wherein one part contains a fluid containing glutamic acid N,N-diacetic acid or a salt thereof (GLDA) and a corrosion inhibitor, and the other part contains a mutual solvent and a surfactant. A pre- or post-flush is a fluid stage pumped into the formation prior to or after the main treatment. The purposes of the pre- or post-flush include but are not limited to adjusting the wettability of the formation, displacing formation brines, adjusting the salinity of the formation, dissolving calcareous material and dissolving iron scales. Such a kit of parts can be conveniently used in the process of the invention, wherein the part containing a fluid containing mutual solvent and, in one embodiment, a surfactant is used as a preflush and/or postflush fluid and the other part containing a fluid containing GLDA, a corrosion inhibitor, and, in one embodiment, a surfactant is used as the main treatment fluid.

For several reasons when treating a subterranean formation a surfactant is added to main treatment fluids or in a separate fluid during the treatment, such surfactant helps to make the formation water-wet, thereby making the main treatment more efficient and allowing a better and deeper contact of the main treatment fluid with the subterranean formation. In addition, adding a surfactant makes the treatment fluids that are commonly aqueous better capable of transporting non-aqueous materials like crude oil.

Besides being able to provide the improved permeability of sandstone formations in the above process, the fluid and the kit of parts used in the process of the invention in addition have the advantage of a good biodegradability and eco-tox profile, and a high acidity without any deposit formation. At the same time, it was found that in the fluid and the kit of parts the presence of GLDA ensures that smaller amounts of some usual additives such as corrosion inhibitors, corrosion inhibitor intensifiers, anti-sludge agents, iron control agents, scale inhibitors are needed to still achieve a similar effect to that of state of the art stimulation fluids, reducing the chemicals burden of the process and creating a more sustainable way to produce oil and/or gas. Under some conditions these additives are even completely redundant. It should be realized that in state of the art treatment fluids for sandstone formations often an anionic surfactant is present as well as a cationic corrosion inhibitor, which means a certain extent of mutual neutralization and hence deterioration of the other's effectivity. As it has now been found that fluids on the basis of GLDA require much less corrosion inhibitor, the fluids and the kit of parts are easier to formulate and the above drawbacks can be avoided more easily. In addition, in the fluids and the kit of parts there is an unexpected compatibility of the ingredients, surfactants, and corrosion inhibitors, as well as a synergistic effect with bactericides and/or biocides.

In this respect, reference is made to S. Al-Harthy et al., "Options for High-Temperature Well Stimulation," Oilfield Review Winter 2008/2009, 20, No. 4, where the use of tri sodium N-hydroxyethyl ethylenediamine N,N',N'-triacetic acid (HEDTA) is disclosed to have much lower undesired corrosion side effects than a number of other chemical materials, like HCl and mud acid, that play a role in the oil industry wherein the use of chromium steel is common practice.

It has now been found that over the whole pH range of 1 to 14, preferably of 3 to 13, GLDA gives an even lower corrosion of chromium-containing materials than HEDTA, especially in the relevant low pH range of 3 to 7, even under the industry limit value of 0.05 lbs/sq.ft (for a 6 hour test period), without the addition of any corrosion inhibitors. Accordingly, the invention covers the use of a fluid containing GLDA that gives an unexpectedly reduced chromium corrosion side effect, and a sandstone formation treatment process wherein corrosion of the chromium-containing equipment is significantly prevented, and an improved process to clean and/or descale chromium-containing equipment. Also, because of the above beneficial effect, the invention covers the use of fluids in which the amount of corrosion inhibitor and corrosion inhibitor intensifier can be greatly reduced compared to the state of the art fluids and processes, while still avoiding corrosion problems in the equipment.

As a further benefit it was found that the fluids and the kit of parts, which in many embodiments are water-based, perform as well in an oil saturated environment as in an aqueous environment. This can only lead to the conclusion that the fluids are extremely compatible with (crude) oil.

It may be noted that WO 2009/086954 discloses fluids containing at least 10 wt% of GLDA and the use thereof in dissolving carbonate formations in a well. However, this document is silent on the use of such fluids in sandstone formations, which is only one type of formation, let alone on the complexity of treating a sandstone formation with acidic fluids to produce oil and/or gas as explained above due to the high amount of sandstone minerals that may interact with the acid.

The fluids and the fluids in the kit of parts preferably contain 5-30 wt% of GLDA, more preferably 10-20 wt%. The fluids may be free of, but preferably contain more than 0 wt% up to 2 wt%, more preferably 0.1-1 wt%, even more preferably 0.1-0.5 wt%, of corrosion inhibitor. The fluids may be free of, but preferably contain more than 0 and up to 5 wt% of surfactant, more preferably more than 0 up to 2 wt%. Finally, they may be free of, but preferably contain more than 0 and up to 5 wt% of mutual solvent.

All the above wt% and vol% ranges and numbers are based on the total fluid. Salts of GLDA that can be used are their alkali metal, alkaline earth metal, or ammonium full and partial salts. Also mixed salts containing different cations can be used. Preferably, the sodium, potassium, and ammonium full or partial salts of GLDA are used.

The fluids and the fluids in the kit of parts are preferably aqueous fluids, i.e. they preferably contain water as a solvent, wherein water can be e.g. fresh water, produced water or seawater, though other solvents may be added as well, as further explained below.

The fluids and the fluids in the kit of parts preferably contain a nonionic or anionic surfactant. Even more preferably, the surfactant is anionic.

The nonionic surfactant in the fluid and the fluids in the kit of parts is preferably selected from the group consisting of alkanolamides, alkoxylated alcohols, alkoxylated amines, amine oxides, alkoxylated amides, alkoxylated fatty acids, alkoxylated fatty amines, alkoxylated alkyl amines (e.g., cocoalkyl amine ethoxylate), alkyl phenyl polyethoxylates, lecithin, hydroxylated lecithin, fatty acid esters, glycerol esters and their ethoxylates, glycol esters and their ethoxylates, esters of propylene glycol, sorbitan, ethoxylated sorbitan, polyglycosides and the like, and mixtures thereof. Alkoxylated alcohols, preferably ethoxylated alcohols, optionally in combination with (alkyl) polyglycosides, are the most preferred nonionic surfactants.

The anionic (sometimes zwitterionic, as two charges are combined into one compound) surfactant is preferably selected from the group of sulfonates, hydrolyzed keratin, sulfosuccinates, taurates, betaines, modified betaines, alkylamidobetaines (e.g., cocoamidopropyl betaine).

The process of the invention can be performed at basically any temperature that is encountered when treating a subterranean formation. The process of the invention is preferably performed at a temperature of between 35 (about 2°C) and 400°F (about 204°C). More preferably, the fluids are used at a temperature where they best achieve the desired effects, which means a temperature of between 77 (about 25°C) and 300°F (about 149°C).

High-temperature applications may benefit from the presence of an oxygen scavenger in an amount of less than about 2 volume percent of the solution.

In one embodiment, the process can be performed at an increased pressure, which means a pressure higher than atmospheric pressure. In many instances it is preferred to pump the fluids into the formation under pressure. Preferably, the pressure used is below fracture pressure, i.e. the pressure at which a specific formation is susceptible to fracture. Fracture pressure can vary a lot depending on the formation treated, but is well known by the person skilled in the art.

In one embodiment, the pH of the fluids and the fluids in the kit of parts can range from 1 to 14, preferably 1.7 to 14. More preferably, however, it is between 3.5 and 13, as in the very acidic ranges of 1.7 to 3.5 and the very alkaline range of 13 to 14, some undesired side effects may be caused by the fluids in the formation, such as too fast dissolution of carbonate giving excessive $CO_2$ formation or an increased risk of reprecipitation. For a better carbonate dissolving capacity it is preferably acidic. On the other hand, it must be realized that highly acidic solutions are more expensive to prepare. Consequently, the solution even more preferably has a pH of 3.5 to 8.

The fluid and the fluids in the kit of parts may contain other additives that improve the functionality of the stimulation action and minimize the risk of damage as a consequence of the said treatment, as is known to anyone skilled in the art.

The fluid and the fluids in the kit of parts may in addition contain one or more of the group of anti-sludge agents, (water-wetting or emulsifying) surfactants, corrosion inhibitor intensifiers, foaming agents, viscosifiers, wetting agents, diverting agents, oxygen scavengers, carrier fluids, fluid loss additives, friction reducers, stabilizers, rheology modifiers, gelling agents, scale inhibitors, breakers, salts, brines, pH control additives such as further acids and/or bases, bactericides/biocides, particulates, crosslinkers, salt substitutes (such as tetramethyl ammonium chloride), relative permeability modifiers, sulfide scavengers, fibres, nanoparticles, consolidating agents (such as resins and/or tackifiers), combinations thereof, or the like.

The mutual solvent is a chemical additive that is soluble in oil, water, acids (often HCl based), and other well treatment fluids. Mutual solvents are routinely used in a range of applications, controlling the wettability of contact surfaces before, during and/or after a treatment, and preventing or breaking emulsions. Mutual solvents are used, as insoluble formation fines pick up organic film from crude oil. These particles are partially oil-wet and partially water-wet. This causes them to collect material at any oil-water interface, which can stabilize various oil-water emulsions. Mutual solvents remove organic films leaving them water-wet, thus emulsions and particle plugging are eliminated. If a mutual solvent is employed, it is preferably selected from the group which includes, but is not limited to, lower alcohols such as methanol, ethanol, 1-propanol, 2-propanol, and the like, glycols such as ethylene glycol, propylene glycol, diethylene glycol, dipropylene glycol, polyethylene glycol, polypropylene glycol, polyethylene glycol-polyethylene glycol block copolymers, and the like, and glycol ethers such as 2-methoxyethanol, diethylene glycol monomethyl ether, and the like, substantially water/oil-soluble esters, such as one or more C2-esters through C10-esters, and substantially water/oil-soluble ketones, such as one or more C2-C10 ketones, wherein substantially soluble means soluble in more than 1 gram per liter, preferably more than 10 grams per liter, even more preferably more than 100 grams per liter, most preferably more than 200 grams per liter. The mutual solvent is preferably present in an amount of 1 to 50 wt% on total fluid. In one embodiment of the process of the present invention, the mutual solvent is not added to the same fluid as the treatment fluid containing GLDA but introduced into the subterranean formation in or as a preflush fluid.

A preferred water/oil-soluble ketone is methyl ethyl ketone.

A preferred substantially water/oil-soluble alcohol is methanol.

A preferred substantially water/oil-soluble ester is methyl acetate.

A more preferred mutual solvent is ethylene glycol monobutyl ether, generally known as EGMBE

The amount of glycol solvent in the solution is preferably about 1 wt% to about 10 wt%, more preferably between 3 and 5 wt%. More preferably, the ketone solvent may be present in an amount from 40 wt% to about 50 wt%; the substantially water-soluble alcohol may be present in an amount within the range of about 20 wt% to about 30 wt%; and the substantially water/oil-soluble ester may be present in an amount within the range of about 20 wt% to about 30 wt%, each amount being based upon the total weight of the solvent in the fluid.

Further surfactants that can be added to the fluid or during the process of the invention can be any surfactant known in the art and can be nonionic, cationic, anionic, zwitterionic. Preferably, the surfactant is nonionic or anionic. Even more preferably, the surfactant is anionic.

The nonionic surfactant of the composition is preferably selected from the group consisting of alkanolamides, alkoxylated alcohols, alkoxylated amines, amine oxides, alkoxylated amides, alkoxylated fatty acids, alkoxylated fatty amines, alkoxylated alkyl amines (e.g., cocoalkyl amine ethoxylate), alkyl phenyl polyethoxylates, lecithin, hydroxylated lecithin, fatty acid esters, glycerol esters and their ethoxylates, glycol esters and their ethoxylates, esters of propylene glycol, sorbitan, ethoxylated sorbitan, polyglycosides and the like, and mixtures thereof. Alkoxylated alcohols, preferably ethoxylated alcohols, optionally in combination with (alkyl) polyglycosides, are the most preferred nonionic surfactants.

The anionic (sometimes zwitterionic, as two charges are combined into one compound) surfactants may comprise any number of different compounds, including sulfonates, hydrolyzed keratin, sulfosuccinates, taurates, betaines, modified betaines, alkylamidobetaines (e.g., cocoamidopropyl betaine).

Examples of surfactants that are also foaming agents that may be utilized to foam and stabilize the treatment fluids include, but are not limited to, betaines, amine oxides, methyl ester sulfonates, alkylamidobetaines such as cocoamidopropyl betaine, alpha-olefin sulfonate, trimethyl tallow ammonium chloride, C8 to C22 alkyl ethoxylate sulfates, and trimethyl coco ammonium chloride.

Suitable surfactants may be used in a liquid or powder form.

Where used, the surfactants may be present in the fluid in an amount sufficient to prevent incompatibility with formation fluids, other treatment fluids, or wellbore fluids at reservoir temperature.

In an embodiment where liquid surfactants are used, the surfactants are generally present in an amount in the range of from about 0.01% to about 5.0% by volume of the fluid.

In one embodiment, the liquid surfactants are present in an amount in the range of from about 0.1% to about 2.0% by volume of the fluid, more preferably between 0.1 and 1 volume%.

In embodiments where powdered surfactants are used, the surfactants may be present in an amount in the range of from about 0.001% to about 0.5% by weight of the fluid.

The antisludge agent can be chosen from the group of mineral and/or organic acids used to stimulate sandstone hydrocarbon-bearing formations. The function of the acid is to dissolve acid-soluble materials so as to clean or enlarge the flow channels of the formation leading to the wellbore, allowing more oil and/or gas to flow to the wellbore.

Problems are caused by the interaction of the (usually concentrated, 20-28%) stimulation acid and certain crude oils (e.g. asphaltic oils) in the formation to form sludge. Interaction studies between sludging crude oils and the introduced acid show that permanent rigid solids are formed at the acid-oil interface when the aqueous phase is below a pH of about 4. No films are observed for non-sludging crudes with acid.

These sludges are usually reaction products formed between the acid and the high molecular weight hydrocarbons such as asphaltenes, resins, etc.

Methods for preventing or controlling sludge formation with its attendant flow problems during the acidization of crude-containing formations include adding "anti-sludge" agents to prevent or reduce the rate of formation of crude oil sludge, which anti-sludge agents stabilize the acid-oil emulsion and include alkyl phenols, fatty acids, and anionic surfactants. Frequently used as the surfactant is a blend of a sulfonic acid derivative and a dispersing surfactant in a solvent. Such a blend generally has dodecyl benzene sulfonic acid (DDBSA) or a salt thereof as the major dispersant, i.e. anti-sludge, component.

The carrier fluids are aqueous solutions which in certain embodiments contain a Bronsted acid to keep the pH in the desired range and/or contain an inorganic salt, preferably NaCl or KCl.

Corrosion inhibitors may be selected from the group of amine and quaternary ammonium compounds and sulfur compounds. Examples are diethyl thiourea (DETU), which is suitable up to 185°F (about 85°C), alkyl pyridinium or quinolinium salt, such as dodecyl pyridinium bromide (DDPB), and sulfur compounds, such as thiourea or ammonium thiocyanate, which are suitable for the range 203-302°F (about 95-150°C), benzotriazole (BZT), benzimidazole (BZI), dibutyl thiourea, a proprietary inhibitor called TIA, and alkyl pyridines.

In general, the most successful inhibitor formulations for organic acids and chelating agents contain amines, reduced sulfur compounds or combinations of a nitrogen compound (amines, quats or polyfunctional compounds) and a sulfur compound. The amount of corrosion inhibitor is preferably between 0.1 and 2 volume%, more preferably between 0.1 and 1 volume% on total fluid.

One or more corrosion inhibitor intensifiers may be added, such as for example formic acid, potassium iodide, antimony chloride, or copper iodide.

One or more salts may be used as rheology modifiers to modify the rheological properties (e.g., viscosity and elastic properties) of the treatment fluids. These salts may be organic or inorganic.

Examples of suitable organic salts include, but are not limited to, aromatic sulfonates and carboxylates (such as p-toluene sulfonate and naphthalene sulfonate), hydroxynaphthalene carboxylates, salicylate, phthalate, chlorobenzoic acid, phthalic acid, 5-hydroxy-1-naphthoic acid, 6-hydroxy-1-naphthoic acid, 7-hydroxy-1-naphthoic acid, 1-hydroxy-2-naphthoic acid, 3-hydroxy-2-naphthoic acid, 5-hydroxy-2-naphthoic acid, 7-hydroxy-2-naphthoic acid, 1,3-dihydroxy-2-naphthoic acid, 3,4-dichlorobenzoate, trimethyl ammonium hydrochloride, and tetramethyl ammonium chloride.

Examples of suitable inorganic salts include water-soluble potassium, sodium, and ammonium halide salts (such as potassium chloride and ammonium chloride), calcium chloride, calcium bromide, magnesium chloride, sodium formate, potassium formate, cesium formate, and zinc halide salts. A mixture of salts may also be used, but it should be noted that preferably chloride salts are mixed with chloride salts, bromide salts with bromide salts, and formate salts with formate salts.

Wetting agents that may be suitable for use in this invention include crude tall oil, oxidized crude tall oil, surfactants, organic phosphate esters, modified imidazolines and amidoamines, alkyl aromatic sulfates and sulfonates, and the like, and combinations or derivatives of these and similar such compounds that should be well known to one of skill in the art. The foaming gas may be air, nitrogen or carbon dioxide. Nitrogen is preferred.

Gelling agents used in a preferred embodiment are polymeric gelling agents.

Examples of commonly used polymeric gelling agents include, but are not limited to, biopolymers, polysaccharides such as guar gums and derivatives thereof, cellulose derivatives, synthetic polymers like polyacrylamides and viscoelastic surfactants, and the like. These gelling agents, when hydrated and at a sufficient concentration, are capable of forming a viscous solution.

When used to make an aqueous-based treatment fluid, a gelling agent is combined with an aqueous fluid and the soluble portions of the gelling agent are dissolved in the aqueous fluid, thereby increasing the viscosity of the fluid.

Viscosifiers may include natural polymers and derivatives such as xanthan gum and hydroxyethyl cellulose (HEC) or synthetic polymers and oligomers such as poly(ethylene glycol) [PEG], poly(diallyl amine), poly(acrylamide), poly(aminomethyl propyl sulfonate) [AMPS polymer], poly(acrylonitrile), poly(vinyl acetate), poly(vinyl alcohol), poly(vinyl amine), poly(vinyl sulfonate), poly(styryl sulfonate), poly(acrylate), poly(methyl acrylate), poly(methacrylate), poly(methyl methacrylate), poly(vinyl pyrrolidone), poly(vinyl lactam), and co-, ter-, and quater-polymers of the following (co-)monomers: ethylene, butadiene, isoprene, styrene, divinyl benzene, divinyl amine, 1,4-pentadiene-3-one (divinyl ketone), 1,6-heptadiene-4-one (diallyl ketone), diallyl amine, ethylene glycol, acrylamide, AMPS, acrylonitrile, vinyl acetate, vinyl alcohol, vinyl amine, vinyl sulfonate, styryl sulfonate, acrylate, methyl acrylate, methacrylate, methyl methacrylate, vinyl pyrrolidone, and vinyl lactam. Yet other viscosifiers include clay-based viscosifiers, especially laponite and other small fibrous clays such as the polygorskites (attapulgite and sepiolite). When using polymer-containing viscosifiers, the viscosifiers may be used in an amount of up to 5% by weight of the fluid.

Examples of suitable brines include calcium bromide brines, zinc bromide brines, calcium chloride brines, sodium chloride brines, sodium bromide brines, potassium bromide brines, potassium chloride brines, sodium nitrate brines, sodium formate brines, potassium formate brines, cesium formate brines, magnesium chloride brines, sodium sulfate, potassium nitrate, and the like. A mixture of salts may also be used in the brines, but it should be noted that preferably chloride salts are mixed with chloride salts, bromide salts with bromide salts, and formate salts with formate salts.

The brine chosen should be compatible with the formation and should have a sufficient density to provide the appropriate degree of well control.

Additional salts may be added to a water source, e.g., to provide a brine, and a resulting treatment fluid, in order to have a desired density.

The amount of salt to be added should be the amount necessary for formation compatibility, such as the amount necessary for the stability of clay minerals, taking into consideration the crystallization temperature of the brine, e.g., the temperature at which the salt precipitates from the brine as the temperature drops.

Preferred suitable brines may include seawater and/or formation brines.

Salts may optionally be included in the fluids of the present invention for many purposes, including for reasons related to compatibility of the fluid with the formation and the formation fluids.

To determine whether a salt may be beneficially used for compatibility purposes, a compatibility test may be performed to identify potential compatibility problems. From such tests, one of ordinary skill in the art will, with the benefit of this disclosure, be able to determine whether a salt should be included in a treatment fluid.

Suitable salts include, but are not limited to, calcium chloride, sodium chloride, magnesium chloride, potassium chloride, sodium bromide, potassium bromide, ammonium chloride, sodium formate, potassium formate, cesium formate, and the like. A mixture of salts may also be used, but it should be noted that preferably chloride salts are mixed with chloride salts, bromide salts with bromide salts, and formate salts with formate salts.

The amount of salt to be added should be the amount necessary for the required density for formation compatibility, such as the amount necessary for the stability of clay minerals, taking into consideration the crystallization temperature of the brine, e.g., the temperature at which the salt precipitates from the brine as the temperature drops.

Salt may also be included to increase the viscosity of the fluid and stabilize it, particularly at temperatures above 180°F (about 82°C).

Examples of suitable pH control additives which may optionally be included in the treatment fluids are acid compositions and/or bases.

A pH control additive may be necessary to maintain the pH of the treatment fluid at a desired level, e.g., to improve the effectiveness of certain breakers and to reduce corrosion on any metal present in the wellbore or formation, etc.

One of ordinary skill in the art will, with the benefit of this disclosure, be able to recognize a suitable pH for a particular application.

In one embodiment, the pH control additive may be an acid composition.

Examples of suitable acid compositions may comprise an acid, an acid-generating compound, and combinations thereof.

Any known acid may be suitable for use with the treatment fluids.

Examples of acids that may be suitable for use in the present invention include, but are not limited to, organic acids (e.g., formic acids, acetic acids, carbonic acids, citric acids, glycolic acids, lactic acids, ethylene diamine tetraacetic acid ("EDTA"), hydroxyethyl ethylene diamine triacetic acid ("HEDTA"), and the like), inorganic acids (e.g., hydrochloric acid, hydrofluoric acid, phosphonic acid, p-toluene sulfonic acid, and the like), and combinations thereof. Preferred acids are HCl and organic acids.

Examples of acid-generating compounds that may be suitable for use in the present invention include, but are not limited to, esters, aliphatic polyesters, ortho esters, which may also be known as ortho ethers, poly(ortho esters), which may also be known as poly(ortho ethers), poly(lactides), poly(glycolides), poly(epsilon-caprolactones), poly(hydroxybutyrates), poly(anhydrides), or copolymers thereof. Derivatives and combinations also may be suitable.

The term "copolymer" as used herein is not limited to the combination of two polymers, but includes any combination of polymers, e.g., terpolymers and the like. Other suitable acid-generating compounds include: esters including, but not limited to, ethylene glycol monoformate, ethylene glycol diformate, diethylene glycol diformate, glyceryl monoformate, glyceryl diformate, glyceryl triformate, methylene glycol diformate, and formate esters of pentaerythritol.

The pH control additive also may comprise a base to elevate the pH of the fluid. Generally, a base may be used to elevate the pH of the mixture to greater than or equal to about 7.

Having the pH level at or above 7 may have a positive effect on a chosen breaker being used and may also inhibit the corrosion of any metals present in the wellbore or formation, such as tubing, screens, etc.

In addition, having a pH greater than 7 may also impart greater stability to the viscosity of the treatment fluid, thereby enhancing the length of time that viscosity can be maintained.

This could be beneficial in certain uses, such as in longer-term well control and in diverting, which uses do not form part of the invention as claimed.

Any known base that is compatible with the gelling agents disclosed herein can be used in the fluids.

Examples of suitable bases include, but are not limited to, sodium hydroxide, potassium carbonate, potassium hydroxide, sodium carbonate, and sodium bicarbonate.

One of ordinary skill in the art will, with the benefit of this disclosure, recognize the suitable bases that may be used to achieve a desired pH elevation.

In some embodiments, the treatment fluid may optionally comprise a further chelating agent.

When added to the treatment fluids, the chelating agent may chelate any dissolved iron (or other divalent or trivalent cations) that may be present in the aqueous fluid and prevent any undesired reactions being caused. Such chelating agents may e.g. prevent such ions from crosslinking the gelling agent molecules.

Such crosslinking may be problematic because, inter alia, it may cause filtration problems, injection problems and/or again cause permeability problems.

Any suitable chelating agent may be used with the present invention.

Examples of suitable chelating agents include, but are not limited to, citric acid, nitrilotriacetic acid ("NTA"), any form of ethylene diamine tetraacetic acid ("EDTA"), hydroxyethyl ethylene diamine triacetic acid ("HEDTA"), diethylene triamine pentaacetic acid ("DTPA"), propylene diamine tetraacetic acid ("PDTA"), ethylene diamine-N,N"-di(hydroxyphenyl acetic) acid ("EDDHA"), ethylene diamine-N,N"-di-(hydroxy-methylphenyl acetic) acid ("EDDHMA"), ethanol diglycine ("EDG"), trans-1,2-cyclohexylene dinitrilotetraacetic acid ("CDTA"), glucoheptonic acid, gluconic acid, sodium citrate, phosphonic acid, salts thereof, and the like.

In some embodiments, the chelating agent may be a sodium or potassium salt. Generally, the chelating agent may be present in an amount sufficient to prevent undesired side effects of divalent or trivalent cations that may be present, and thus also functions as a scale inhibitor.

One of ordinary skill in the art will, with the benefit of this disclosure, be able to determine the proper concentration of a chelating agent for a particular application.

In some embodiments, the fluids and the fluids in the kit of parts may contain bactericides or biocides, inter alia, to protect the subterranean formation as well as the fluid from attack by bacteria. Such attacks can be problematic because they may lower the viscosity of the fluid, resulting in poorer performance, such as poorer sand suspension properties, for example. Any bactericides known in the art are suitable. Biocides and bactericides protecting against bacteria that may attack GLDA or sulfates are preferred.

An artisan of ordinary skill will, with the benefit of this disclosure, be able to identify a suitable bactericide and the proper concentration of such bactericide for a given application.

Examples of suitable bactericides and/or biocides include, but are not limited to, phenoxyethanol, ethylhexyl glycerine, benzyl alcohol, methyl chloroisothiazolinone, methyl isothiazolinone, methyl paraben, ethyl paraben, propylene glycol, bronopol, benzoic acid, imidazolinidyl urea, a 2,2-dibromo-3-nitrilopropionamide, and a 2-bromo-2-nitro-1,3-propane diol. In one embodiment, the bactericides are present in the fluid in an amount in the range of from about 0.001% to about 1.0% by weight of the fluid.

Fluids also may comprise breakers capable of reducing the viscosity of the fluid at a desired time.

Examples of such suitable breakers for fluids include, but are not limited to, oxidizing agents such as sodium chlorites, sodium bromate, hypochlorites, perborate, persulfates, and peroxides, including organic peroxides. Other suitable breakers include, but are not limited to, suitable acids and peroxide breakers, triethanol amine, as well as enzymes that may be effective in breaking. The breakers can be used as is or encapsulated.

Examples of suitable acids include, but are not limited to, hydrochloric acid, hydrofluoric acid, formic acid, acetic acid, citric acid, lactic acid, glycolic acid, etc. A breaker may be included in a treatment fluid of the present invention in an amount and form sufficient to achieve the desired viscosity reduction at a desired time.

The breaker may be formulated to provide a delayed break, if desired.

The fluids of the present invention also may comprise suitable fluid loss additives. Such fluid loss additives may be particularly useful when a fluid is used in a fracturing application or in a fluid used to seal a formation against invasion of fluid from the wellbore.

Any fluid loss agent that is compatible with the fluids is suitable for use in the present invention.

Examples include, but are not limited to, starches, silica flour, gas bubbles (energized fluid or foam), benzoic acid, soaps, resin particulates, relative permeability modifiers, degradable gel particulates, diesel or other hydrocarbons dispersed in fluid, and other immiscible fluids.

Another example of a suitable fluid loss additive is one that comprises a degradable material.

Suitable examples of degradable materials include polysaccharides such as dextran or cellulose; chitins; chitosans; proteins; aliphatic polyesters; poly(lactides); poly(glycolides); poly(glycolide-co-lactides); poly(epsilon-caprolactones); poly(3-hydroxybutyrates); poly(3-hydroxybutyrate-co-hydroxyvalerates); poly(anhydrides); aliphatic poly(carbonates); poly(ortho esters); poly(amino acids); poly(ethylene oxides); poly(phosphazenes); derivatives thereof; or combinations thereof.

In some embodiments, a fluid loss additive may be included in an amount of about 5 to about 2,000 lbs/Mgal (about 600 to about 240,000 g/Mliter) of the fluid.

In some embodiments, the fluid loss additive may be included in an amount from about 10 to about 50 lbs/Mgal (about 1,200 to about 6,000 g/Mliter) of the fluid.

In certain embodiments, a stabilizer may optionally be included in the fluids.

It may be particularly advantageous to include a stabilizer if a chosen fluid is experiencing viscosity degradation.

One example of a situation where a stabilizer might be beneficial is where the BHT (bottom hole temperature) of the wellbore is sufficient to break the fluid by itself without the use of a breaker.

Suitable stabilizers include, but are not limited to, sodium thiosulfate, methanol, and salts such as formate salts and potassium or sodium chloride.

Such stabilizers may be useful when the fluids are utilized in a subterranean formation having a temperature above about 200°F (about 93°C). If included, a stabilizer may be added in an amount of from about 1 to about 50 lbs/Mgal (about 120 to about 6,000 g/Mliter) of fluid.

Scale inhibitors may be added to the fluids, for example, when such fluids are not particularly compatible with the formation waters in the formation in which they are used.

These scale inhibitors may include water-soluble organic molecules with carboxylic acid, aspartic acid, maleic acids, sulfonic acids, phosphonic acid, and phosphate ester groups including copolymers, ter-polymers, grafted copolymers, and derivatives thereof.

Examples of such compounds include aliphatic phosphonic acids such as diethylene triamine penta (methylene phosphonate) and polymeric species such as polyvinyl sulfonate.

The scale inhibitor may be in the form of the free acid but is preferably in the form of mono- and polyvalent cation salts such as Na, K, Al, Fe, Ca, Mg, $NH_4$. Any scale inhibitor that is compatible with the fluid in which it will be used is suitable for use in the present invention.

Suitable amounts of scale inhibitors that may be included in the fluids of the present invention may range from about 0.05 to 100 gallons per about 1,000 gallons (i.e. 0.05 to 100 liters per 1,000 liters) of the fluid.

Any particulates such as proppant, gravel that are commonly used in subterranean operations in sandstone formations may be used in the present invention (e.g., sand, gravel, bauxite, ceramic materials, glass materials, wood, plant and vegetable matter, nut hulls, walnut hulls, cotton seed hulls, cement, fly ash, fibrous materials, composite particulates, hollow spheres and/or porous proppant).

It should be understood that the term "particulate" as used in this disclosure includes all known shapes of materials including substantially spherical materials, oblong, fibre-like, ellipsoid, rod-like, polygonal materials (such as cubic materials), mixtures thereof, derivatives thereof, and the like.

In some embodiments, coated particulates may be suitable for use in the treatment fluids.

It should be noted that many particulates also act as diverting agents. Further diverting agents are viscoelastic surfactants and in-situ gelled fluids.

Oxygen scavengers may be needed to enhance the thermal stability of the GLDA. Examples thereof are sulfites and ethorbates.

Friction reducers can be added in an amount of up to 0.2 vol%. Suitable examples are viscoelastic surfactants and enlarged molecular weight polymers.

Crosslinkers can be chosen from the group of multivalent cations that can crosslink polymers such as Al, Fe, B, Ti, Cr, and Zr, or organic crosslinkers such as polyethylene amides, formaldehyde.

Sulfide scavengers can suitably be an aldehyde or ketone.

Viscoelastic surfactants can be chosen from the group of amine oxides or carboxyl butane based surfactants.

In the process of the invention the fluid can be flooded back from the formation. Even more preferably, (part of) the solution is recycled.

It must be realized, however, that GLDA, being biodegradable chelating agents, will not completely flow back and therefore is not recyclable to the full extent.

The invention is further illustrated by the Examples below.

Examples

General procedure for core flooding experiments

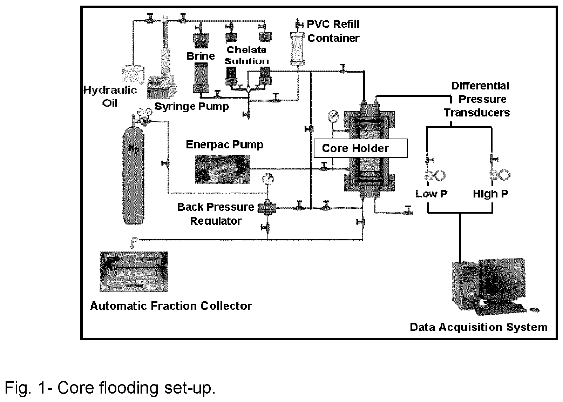

Figure 1 shows a schematic diagram for the core flooding apparatus. For each core flooding test a new piece of core with a diameter of 1.5 inches (3,81 cm) and a length of 6 or 20 inches (15,24 or 50,8 cm) was used. The cores were placed in the coreholder and shrinkable seals were used to prevent any leakage between the holder and the core.

An Enerpac hand hydraulic pump was used to pump the brine or test fluid through the core and to apply the required overburden pressure. The temperature of the preheated test fluids was controlled by a compact bench top CSC32 series, with a 0.1° resolution and an accuracy of $\pm$ 0.25% full scale $\pm$ 1°C. It uses a type K thermocouple and two Outputs (5 A 120 Vac SSR). A back pressure of 1,000 psi ($6,89 \times 10^6$ Pa) was applied to keep $CO_2$ in solution.

The back pressure was controled by a Mity-Mite back pressure regulator model S91-W and kept constant at 300 - 400 psi ($2,07 \times 10^6$ Pa - $2,76 \times 10^6$ Pa) less than the overburden pressure. The pressure drop across the core was measured with a set of FOXBORO differential pressure transducers, models IDP10-A26E21F-M1, and monitored by lab view software. There were two gauges installed with ranges of 0-300 psi ($2,07 \times 10^6$ Pa) and 0-1500 psi ($1,03 \times 10^7$ Pa), respectively.

Before running a core flooding test, the core was first dried in an oven at 300°F (149 °C) and weighted. Subsequently the core was saturated with 5 wt% NaCl brine at a 2,000 psi ($1,37 \times 10^7$ Pa) overburden pressure and 1,000 psi ($6,89 \times 10^6$ Pa) back pressure. The pore volume was calculated from the difference in weight of the dried and saturated core divided by the brine density.

The core permeability before and after the treatment was calculated from the pressure drop using Darcy's equation for laminar, linear, and steady-state flow of Newtonian fluids in porous media:

$$K = (122.81q\mu L)/(\Delta pD^2)$$

where K is the core permeability, md, q is the flow rate, $cm^3/min$, $\mu$ is the fluid viscosity, cP, L is the core length, in., $\Delta p$

is the pressure drop across the core, psi, and D is the core diameter, in.

Prior to the core flooding tests the cores were pre-heated to the required test temperature for at least 3 hours.

In the Examples solutions of 15 wt% HCl and of HEDTA and GLDA (both 0.6 M and having a pH of about 4 or 7) were investigated on Berea and/or Bandera sandstone cores to determine the functionality of those chelating agents with the Berea and Bandera sandstone core at 150 (about 66°C) and 300°F (about 149°C) and 5 cm$^3$/min. HEDTA and GLDA were obtained from AkzoNobel Functional Chemicals BV. MGDA was obtained from BASF Corporation.

Below Table 1 indicates the mineral composition of both sandstone formations.

| Table 1-Mineral Composition of Berea and Bandera Sandstone Cores | | |
|---|---|---|
| **Mineral** | **Berea** | **Bandera** |
| Quartz | 86 | 57 |
| Dolomite | 1 | 16 |
| Calcite | 2 | -- |
| Feldspar | 3 | -- |
| Kaolinite | 5 | 3 |
| Illite | 1 | 10 |
| Chlorite | 2 | 1 |
| Plagioclase | -- | 12 |

Example 1

Stimulating Berea sandstone with HCl, GLDA, MGDA, and HEDTA solutions

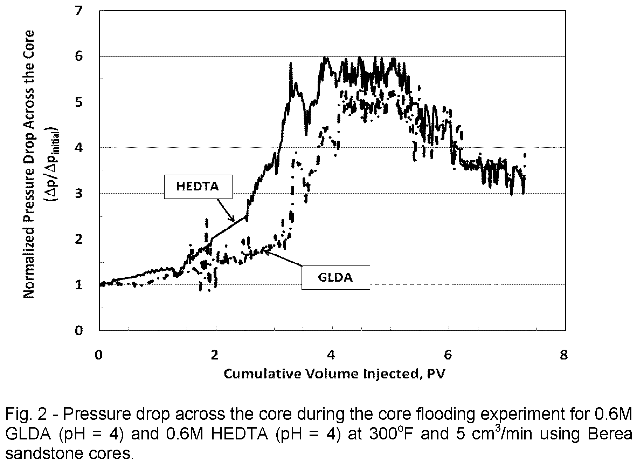

Figure 2 shows the normalized pressure drop across the core for 0.6M HEDTA (pH = 4) and 0.6M GLDA (pH = 4) at 300°F (about 149°C) and 5 cm$^3$/min using Berea sandstone cores. Both chelating agents have almost the same trend. After injecting 2 PV (pore volumes), GLDA was more compatible than HEDTA (it is suspected that there was some fines migration in this phase using HEDTA), and after injecting 5 PV, the normalized pressure drop was the same for the two chelating agents. On the basis of these results it can be concluded that both HEDTA and GLDA at pH 4 are compatible with the Berea sandstone core.

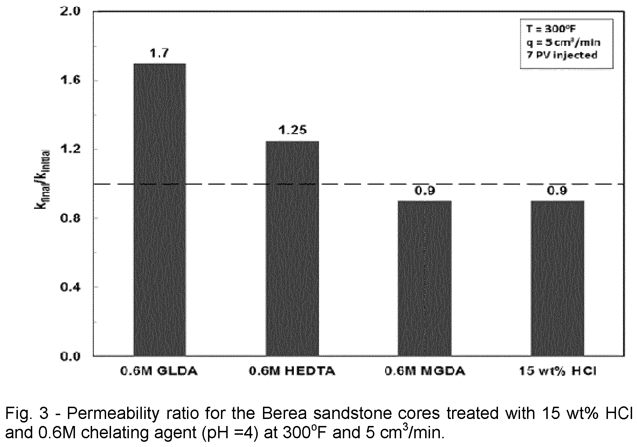

Figure 3 shows the permeability ratio (final core permeability/initial core permeability) for 15 wt% HCl, and for 0.6M HEDTA, 0.6 M MGDA, 0.6M GLDA at pH 4 in Berea sandstone. The permeability ratio was 1.70 for GLDA, 1.25 for HEDTA, 0.9 for MGDA, and 0.9 for HCl, showing the improved ability of GLDA over HEDTA, MGDA, and HCl in stimulating Berea sandstone cores at low pH.

Example 2

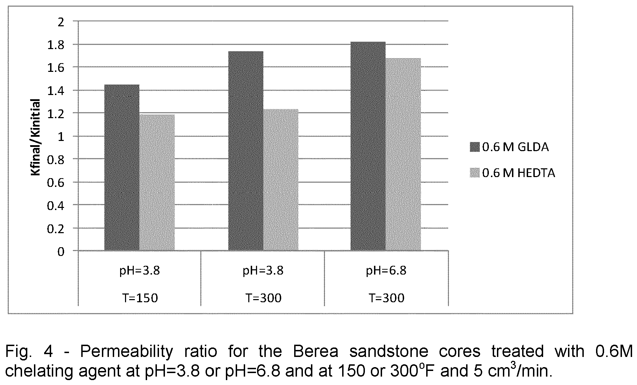

Figure 4 compares the permeability ratio of 0.6 M GLDA and 0.6 M HEDTA under identical conditions in Berea sandstone. Irrespective of the conditions (pH=3.8 or 6.8 and temperature=150 or 300°F, i.e. 66 °C or 149 °C), the permeability ratio after stimulation with GLDA is significantly better than after stimulation with HEDTA. Analyses of the effluent samples showed the main difference between HEDTA and GLDA is the amount of magnesium and aluminium that is dissolved. At pH=3.8 and 150°F (66 °C) GLDA dissolves over 2 times the amount of aluminium compared to HEDTA and over 3 times as much magnesium. This indicates that GLDA not only acts on the calcium carbonate inside the sandstone core, but also on the dolomite and, surprisingly, on the clays (alumino silicates) as well. In contrast to HCl, the interaction of GLDA with the clays does not lead to a reduction of the permeability, but to improved permeability.

Example 3

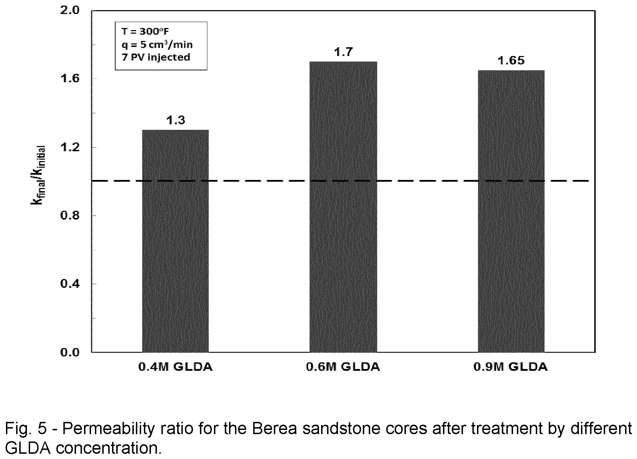

Figure 5 shows the permeability ratio for the Berea sandstone cores treated with 0.4M, 0.6M, and 0.9M GLDA/pH 4 at 5 cm$^3$/min and 300°F (149 °C). GLDA at 0.6M concentration almost gave the same permeability enhancement as that at 0.9M concentration. Since the Berea sandstone cores do not have much carbonate to dissolve (3 wt% calcite and dolomite), there is no need to increase the concentration to 0.9M. At 0.4M concentration, GLDA gave less permeability enhancement compared to that at 0.6M, because it has low dissolving capacity at that low concentration.

## Example 4

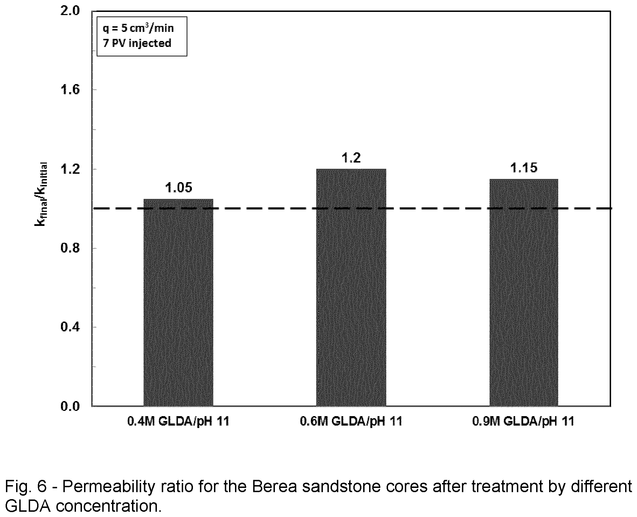

Figure 6 shows the permeability ratio for the Berea sandstone cores treated by 0.4M, 0.6M, and 0.9M GLDA/pH 11 at 5 cm$^3$/min and 300°F. Similar results were obtained as in the case of GLDA at pH 4, increasing the concentration of GLDA/pH 11 from 0.4 to 0.6M gave the almost the same enhancement in permeability ratio.

## Example 5

### Stimulating Bandera Sandstone Cores with HCl, HEDTA, MGDA and GLDA solutions

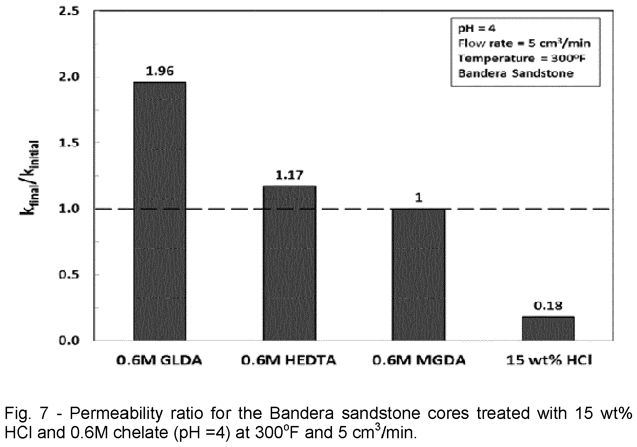

Fig. 7 shows the permeability ratio (final core permeability/initial core permeability) for 15 wt% HCl, and for 0.6M HEDTA, 0.6M MGDA, and 0.6M GLDA at pH 4 in Bandera sandstone. The permeability ratio for GLDA was 1.96, 1.17 for HEDTA, 1 for MGDA, and only 0.18 for HCl. GLDA clearly dissolved more calcium than HEDTA or MGDA at pH 4 and improved the Bandera core permeability more than HEDTA or MGDA. HCl was clearly found to cause damage to the Bandera sandstone core due to the clay appearing unstable in HCl at the reaction conditions.

GLDA at low pH value (4) thus performed better than HEDTA or MGDA in both Berea and Bandera sandstone cores at 300°F (about 149°C). GLDA at pH 4 improved the core permeability 1.4 times more than HEDTA did with Berea sandstone cores, and 1.7 times more in the case of Bandera sandstone cores, while MGDA did not improve the permeability in any of these cores, which indicates that GLDA is a more suitable chelating agent for stimulating sandstone cores than HEDTA or MGDA. The permeability results found for HCl were even worse than those for HEDTA or MGDA, and GLDA performed much better in both cores than HCl.

## Example 6

A beaker glass was filled with 400 ml of a solution of a chelating agent as indicated in Table 2 below, i.e. about 20 wt% of the monosodium salt of about pH 3.6. This beaker was placed in a Burton Corblin 1 liter autoclave.

The space between the beaker and the autoclave was filled with sand. Two clean steel coupons of Cr13 (UNS S41000 steel) were attached to the autoclave lid with a PTFE cord. The coupons had been cleaned with isopropyl alcohol and weighted before the test. The autoclave was purged three times with a small amount of $N_2$. Subsequently the heating was started or, in the case of high-pressure experiments, the pressure was first set to c. 1,000 psi (6,89 x 10$^6$ Pa) with $N_2$. The 6-hour timer was started directly after reaching a temperature of 149°C. After 6 hours at 149°C the autoclave was cooled quickly with cold tap water in c. 10 minutes to <60°C. After cooling to <60°C the autoclave was depressurized and the steel coupons were removed from the chelate solution. The coupons were flushed with a small amount of water and isopropyl alcohol to clean them. The coupons were weighted again and the chelate solution was retained.

Table 2: Acid/Chelate solutions:

| Chelate | Active ingredient and Content | pH as such |
|---------|-------------------------------|------------|
| GLDA | 20.4 wt% GLDA-NaH$_3$ | 3.51 |
| HEDTA | 22.1 wt% HEDTA-NaH$_2$ | 3.67 |
| MGDA | 20.5 wt% MGDA-NaH$_2$ | 3.80 |

In the scheme of Table 3 the results of the corrosion study of 13Cr steel coupons (UNS S41000) are shown for the different solutions.

Table 3: Corrosion data for different chelate or acid solutions

| Test | Chelate | pH | Temp. °C | Pressure (PSI) | Assay after corrosion test | 6Hrs corrosion lbs/sq.ft |
|------|---------|-----|----------|----------------|----------------------------|--------------------------|
| #01 | GLDA | 3.5 | 160 | - | 18.4wt% as GLDA-NaH$_3$ | 0.0013 |
| #02 | GLDA | 3.5 | 149 | - | 20.1wt% as GLDA-NaH$_3$ | 0.0008 |
| #03 | HEDTA | 3.7 | 149 | - | 24.4 wt% as HEDTA-NaH$_2$ | 0.3228 |
| #04 | GLDA | 3.5 | 149 | >1000 | 20.1wt% as GLDA-NaH$_3$ | 0.0009 |
| #05 | HEDTA | 3.7 | 149 | >1000 | 16.0wt% as HEDTA-NaH$_2$ | 0.5124 |
| #06 | MGDA | 3.6 | 149 | >1000 | 22.7wt% as MGDA-NaH$_2$ | 0.0878 |

The corrosion rates of HEDTA (pH 3.7) at 149°C and pressure 1,000 psi ($6,89 \times 10^6$ Pa) are significantly higher than of MGDA (pH 3.8) and much higher compared to GLDA (pH 3.5). The corrosion rates of both HEDTA (pH 3.7) and MGDA (pH 3.8) at 149°C and pressure 1,000 psi ($6,89 \times 10^6$ Pa) are higher than the generally accepted limit value in the oil and gas industry of 0.05 lbs/sq.ft ($0,244$ kg/m$^2$) (6-hour test period), which means that they will need a corrosion inhibitor for use in this industry. As MGDA is significantly better than HEDTA, it will require a much decreased amount of corrosion inhibitor for acceptable use in the above applications when used in line with the conditions of this Example. The 6-hour corrosion of GLDA for 13Cr steel (stainless steel S410, UNS 41000) at 149°C (300°F) is well below the generally accepted limit value in the oil and gas industry of 0.05 lbs/sq.ft ($0,244$ kg/m$^2$). It can thus be concluded that it is possible to use GLDA in this field without the need to add a corrosion inhibitor.

Example 7

Corrosion tests with anionic surfactants and/or corrosion inhibitors were performed according to the method described in Example 6. The surfactant, Witconate NAS-8, was selected from the group of anionic water-wetting surfactants. Witconate NAS-8 consists of 36% 1-octanesulfonic acid, sodium salt, 60% water, and 4% sodium sulfate. Armohib 31 represents a group of widely used corrosion inhibitors for the oil and gas industry and consists of alkoxylated fatty amine salts, alkoxylated organic acid, and N,N'-dibutyl thiourea, with 100% active ingredients. The corrosion inhibitor and anionic surfactant are available from AkzoNobel Surface Chemistry.

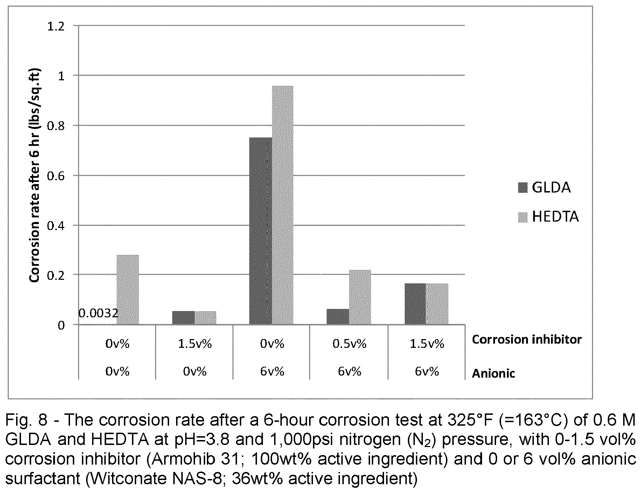

Figure 8 clearly shows the difference in corrosion behaviour between GLDA and HEDTA. Without additives GLDA shows no corrosion, whereas the corrosion rate of HEDTA is 0.2787 lbs/sq.ft ($1,36$ kg/m$^2$), which is far above the generally accepted limit of 0.05 lbs/sq ft. Upon addition of the corrosion inhibitor the corrosion rates of HEDTA and GLDA are similar. Addition of an anionic surfactant leads to an increase in the corrosion rate to unacceptable rates of 0.7490 lbs/sq.ft ($3,66$ kg/m$^2$) for GLDA and 0.9592 lbs/sq.ft ($4,68$ kg/m$^2$) for HEDTA, indicating the corrosive character of this anionic surfactant itself. When both 0.5 vol% corrosion inhibitor and 6 vol% anionic surfactant are combined with HEDTA, the corrosion rate is reduced to 0.2207 lbs/sq.ft ($1,08$ kg/m$^2$), which is still far too much. In contrast, the corrosion rate of GLDA decreases to acceptable rates under identical conditions, indicating the surprisingly gentle character of GLDA for this metallurgy. Even when the amount of corrosion inhibitor is increased to 1.5 vol%, the corrosion rate of HEDTA is still 3 times more than the acceptable rate. For GLDA the corrosion rate increases when the amount of corrosion inhibitor is increased to 1.5 vol%, indicating that the optimum corrosion inhibitor concentration under these conditions is around 0.5 vol%, which is significantly lower than the amount required for HEDTA.

Example 8

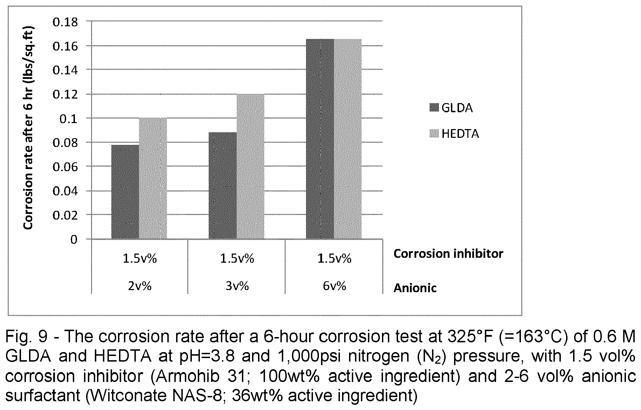

To study the influence of the concentration of the anionic surfactant more corrosion experiments were performed according to the method described in example 6, with the corrosion inhibitor and anionic surfactant described in example 7. Figure 9 shows the comparison between the corrosion rates of HEDTA and GLDA with 1.5 vol% Armohib 31 and 2 to 6 vol% Witconate NAS-8. The amount of corrosion inhibitor was not optimized to achieve a corrosion rate below the acceptable limit of 0.05 lbs/sq. ft, but figure 9, clearly shows that GLDA is significantly less corrosive than HEDTA under identical conditions, especially at lower concentrations of surfactant. It was noted that the optimal concentration of corrosion inhibitor to get an acceptable corrosion rate would be higher than 1.5 vol% for HEDTA, but lower than 1.5 vol% for GLDA.

Example 9

The effect of saturating cores with oil was studied at 300°F (149 °C). The cores were saturated first with water and then flushed with oil at 0.1 cm$^3$/min, three pore volumes of oil were injected into the core, and after that the cores were left in the oven at 200°F (93°C) for 24 hours and 15 days. The core flooding experiments for the cores saturated with oil at $S_{wi}$ were acquired by treating them with 0.6M GLDA at an injection rate of 2 cm$^3$/min and 300°F (149 °C). The Indiana core that was treated with 0.6M GLDA at pH 4 had a pore volume of 22 cm$^3$ and the residual water after flushing the core with oil was 5 cm$^3$ ($S_{wi}$ = 0.227). After soaking the core for 15 days and then flushing it with water at 300°F (149 °C) and 2 cm$^3$/min only 6 cm$^3$ of the oil was recovered and the volume of residual oil was 10 cm$^3$ ($S_{or}$ = 0.46); this is a high fraction of the pore volume indicating an oil-wet core. The pore volume to breakthrough ($PV_{bt}$) for the cores that were treated with GLDA was 3.65 PV for the water-saturated core, and 3.10 PV for the oil-saturated core.

The presence of oil in the core reduced the $PV_{bt}$ for the cores treated with 0.6M GLDA at pH of 4, thus the GLDA performance was enhanced in the oil-saturated cores by creating a dominant wormhole. The enhancement in the performance can be attributed to the reduced contact area exposed to the reaction with GLDA. 2D CT scan images showed that the wormhole diameter was not affected by saturating the core with oil or water.

This Example demonstrates that GLDA is similarly compatible with oil as with water.

Example 10

The effect of saturating cores with oil and water on the performance of GLDA was studied using the method described in example 9. A solution of 0.6M GLDA of pH 4 at 5 cm$^3$/min and 300°F (149 °C) was used in the core flooding experiments. The PV$_{bt}$ was 4 PV in the water-saturated cores.

The core flooding experiments were repeated using oil-saturated cores with the same solution, giving again a PV$_{bt}$ of 4 PV in the case of oil-saturated cores. This demonstrates again that GLDA is similarly compatible with oil as with water.

**Claims**

1.   Process for treating a sandstone formation comprising introducing an acidic fluid containing 5 to 30 wt% of glutamic acid N,N-diacetic acid or a salt thereof (GLDA) and having a pH of higher than 1 into the formation.

2.   Process of claim 1, wherein the temperature is between 35 and 400°F (about 2 and 204°C).

3.   Process of claim 1 or 2 wherein the fluid in addition contains a corrosion inhibitor, a surfactant, and optionally a mutual solvent.

4.   Process of claim 3 wherein the fluid in addition contains one or more components from the group of anti-sludge agents, (water-wetting or emulsifying) surfactants, corrosion inhibitor intensifiers, foaming agents, viscosifiers, wetting agents, diverting agents, oxygen scavengers, carrier fluids, fluid loss additives, friction reducers, stabilizers, rheology modifiers, gelling agents, scale inhibitors, breakers, salts, brines, pH control additives, bactericides/biocides, particulates, crosslinkers, salt substitutes, relative permeability modifiers, sulfide scavengers, fibres, nanoparticles, and consolidating agents.

5.   Process of claim 3 or 4, wherein the surfactant is a nonionic or anionic surfactant.

6.   Process of any one of claims 3 to 5, wherein the surfactant is present in an amount of 0.1 to 2 volume% on total fluid.

7.   Process of any one of claims 3 to 6, wherein the corrosion inhibitor is present in an amount of more than 0 up to 2 volume%, preferably 0.1 to 2 volume%, on total fluid.

8.   Process of any one of claims 3 to 7 wherein the fluid contains water as a solvent.

**Patentansprüche**

1.   Verfahren für die Behandlung einer Sandsteinformation, umfassend Einführen eines sauren Fluids, das 5 bis 30 Gew.-% Glutaminsäure-N,N-diessigsäure oder ein Salz davon (GLDA) enthält und einen pH-Wert höher als 1 aufweist, in die Formation.

2.   Verfahren nach Anspruch 1, wobei die Temperatur zwischen 35 und 400 °F (etwa 2 und 204 °C) liegt.

3.   Verfahren nach Anspruch 1 oder 2, wobei das Fluid zusätzlich einen Korrosionsinhibitor, ein Tensid und wahlweise ein gegenseitiges Lösungsmittel enthält.

4.   Verfahren nach Anspruch 3, wobei das Fluid zusätzlich eine oder mehrere Komponenten aus der Gruppe von Antischlammmitteln, (wasserbenetzenden oder emulgierenden) Tensiden, Korrosionsinhibitorverstärkern, Schäumungsmitteln, Eindickmitteln, Benetzungsmitteln, Ablenkmitteln, Sauerstofffängern, Trägerfluiden, Fluidverlustzusatzmitteln, Reibungsreduziermitteln, Stabilisatoren, Rheologiemodifiziermitteln, Gelbildungsmitteln, Kesselsteininhibitoren, Sprengmitteln, Salzen, Solen, pH-Wert-Regulierzusatzmitteln, Bakteriziden/Bioziden, teilchenförmigen Substanzen, Vernetzungsmitteln, Salzersatzmitteln, Modifiziermitteln für relative Durchlässigkeit, Sulfidfängern, Fasern, Nanopartikeln und Konsolidierungsmitteln enthält.

5.   Verfahren nach Anspruch 3 oder 4, wobei das Tensid ein nichtionisches oder anionisches Tensid ist.

**6.** Verfahren nach einem der Ansprüche 3 bis 5, wobei das Tensid in einer Menge von 0,1 bis 2 Volumen-%, auf das gesamte Fluid bezogen, vorliegt.

**7.** Verfahren nach einem der Ansprüche 3 bis 6, wobei der Korrosionsinhibitor in einer Menge von mehr als 0 bis zu 2 Volumen-%, bevorzugt 0,1 bis 2 Volumen-%, auf das gesamte Fluid bezogen, vorliegt.

**8.** Verfahren nach einem der Ansprüche 3 bis 7, wobei das Fluid Wasser als Lösungsmittel enthält.

**Revendications**

**1.** Procédé de traitement d'une formation de grès comprenant l'introduction d'un fluide acide contenant de 5 à 30 % en poids d'acide glutamique acide N,N-diacétique ou d'un sel de celui-ci (GLDA) et ayant un pH supérieur à 1 dans la formation.

**2.** Procédé selon la revendication 1, dans lequel la température est comprise entre 35 et 400 °F (environ 2 et 204 °C).

**3.** Procédé selon la revendication 1 ou 2, dans lequel le fluide contient en outre un inhibiteur de corrosion, un tensioactif, et éventuellement un solvant commun.

**4.** Procédé selon la revendication 3, dans lequel le fluide contient en outre un ou plusieurs composants du groupe des agents anti-boues, tensioactifs (mouillants aqueux ou émulsifiants), intensificateurs inhibiteurs de corrosion, agents moussants, agents améliorant la viscosité, agents mouillants, agents de déviation, piégeurs d'oxygène, fluides porteurs, additifs de perte de fluide, réducteurs de friction, stabilisateurs, modificateurs de rhéologie, agents gélifiants, inhibiteurs de tartre, agents briseurs, sels, saumures, additifs de contrôle du pH, bactéricides/biocides, particules, agents de réticulation, substituts de sel, modificateurs de perméabilité relative, piégeurs de sulfure, fibres, nanoparticules et agents de consolidation.

**5.** Procédé selon la revendication 3 ou 4, dans lequel le tensioactif est un tensioactif non ionique ou anionique.

**6.** Procédé selon l'une quelconque des revendications 3 à 5, dans lequel le tensioactif est présent en une quantité de 0,1 à 2 % en volume sur le fluide total.

**7.** Procédé selon l'une quelconque des revendications 3 à 6, dans lequel l'inhibiteur de corrosion est présent en une quantité de plus de 0 jusqu'à 2 % en volume, de préférence de 0,1 à 2 % en volume, sur le fluide total.

**8.** Procédé selon l'une quelconque des revendications 3 à 7, dans lequel le fluide contient de l'eau en tant que solvant.

Fig. 1- Core flooding set-up.

Fig. 2 - Pressure drop across the core during the core flooding experiment for 0.6M GLDA (pH = 4) and 0.6M HEDTA (pH = 4) at 300°F and 5 cm³/min using Berea sandstone cores.

Fig. 3 - Permeability ratio for the Berea sandstone cores treated with 15 wt% HCl and 0.6M chelating agent (pH =4) at 300°F and 5 cm³/min.

Fig. 4 - Permeability ratio for the Berea sandstone cores treated with 0.6M chelating agent at pH=3.8 or pH=6.8 and at 150 or 300°F and 5 cm³/min.

Fig. 5 - Permeability ratio for the Berea sandstone cores after treatment by different GLDA concentration.

Fig. 6 - Permeability ratio for the Berea sandstone cores after treatment by different GLDA concentration.

Fig. 7 - Permeability ratio for the Bandera sandstone cores treated with 15 wt% HCl and 0.6M chelate (pH =4) at 300°F and 5 cm³/min.

Fig. 8 - The corrosion rate after a 6-hour corrosion test at 325°F (=163°C) of 0.6 M GLDA and HEDTA at pH=3.8 and 1,000psi nitrogen (N$_2$) pressure, with 0-1.5 vol% corrosion inhibitor (Armohib 31; 100wt% active ingredient) and 0 or 6 vol% anionic surfactant (Witconate NAS-8; 36wt% active ingredient)

Fig. 9 - The corrosion rate after a 6-hour corrosion test at 325°F (=163°C) of 0.6 M GLDA and HEDTA at pH=3.8 and 1,000psi nitrogen ($N_2$) pressure, with 1.5 vol% corrosion inhibitor (Armohib 31; 100wt% active ingredient) and 2-6 vol% anionic surfactant (Witconate NAS-8; 36wt% active ingredient)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009086954 A

**Non-patent literature cited in the description**

- **GDANSKI, R.D. ; SHUCHART, C.E.** Advanced Sandstone-Acidizing Designs with Improved Radial Models. *SPE Production & Facilities,* 1998, vol. 13 (4), 272-278
- **FRENIER, W.W ; BRADY, M. ; AL-HARTHY, S. et al.** Hot Oil and Gas Wells Can Be Stimulated without Acids. *SPE Production & Facilities,* 2004, vol. 19 (4), 189-199
- **PARKINSON, M. ; MUNK, T. ; BROOKLEY, J. ; CAETANO, A. ; ALBUQUERQUE, M. ; COHEN, D. ; REEKIE, M.** Stimulation of Multilayered HighCarbonate-Content Sandstone Formations in West Africa Using Chelant-Based Fluids and Mechanical Diversion. *Paper SPE 128043 presented at the SPE International Symposium and Exhibition on Formation Damage,* 10 February 2010
- **S. AL-HARTHY et al.** Options for High-Temperature Well Stimulation. *Oilfield Review Winter,* 2008, vol. 20 (4